# EUROPEAN PATENT APPLICATION

(11) **EP 4 663 347 A1**
(43) Date of publication of application: **17.12.2025**
(21) Application number: 25178124.1
(22) Date of filing: 22.05.2025
(51) Int. Cl.: B25B 11/00

(54) **SUCTION CUP GRIPPING DEVICE**

(30) Priority: 10.06.2024 IT 202400013183
(71) Applicant: Raimondi S.p.A., 41122 Modena (IT)
(72) Inventor: SIGHINOLFI, Riccardo, 42048 RUBIERA (RE) (IT)
(74) Representative: Corradini, Cesare

(57) **Abstract**

A gripping device (10) for handling objects, which comprises:
- a support body (20) provided with a handle (25);
- a deformable suction cup (30) provided with a ring-closed peripheral edge (32), wherein the suction cup (30) is connected to the support body (20);
- an air suction pump (40) associated with the support body (20) and connected to a suction mouth (360) provided in an area inside the peripheral edge (32) of the suction cup (30) by means of a suction duct (43,36); and
- a non-return valve (45) of the duckbill type, wherein the non-return valve (45) is operable by the suction pump (40) from a closed position to an open position.

## Description

### TECHNICAL FIELD

The present invention generally relates to a device for manipulating and/or handling objects, more in particular a suction cup gripping device, i.e., one that employs the vacuum principle to removably grasp a relatively smooth, airtight surface of an object. For example, the gripping device of the present invention can be used to grasp, manipulate and/or handle various objects, such as a slab of ceramic (tile or the like) or glass or metal or the like.

### PRIOR ART

Various suction cup gripping devices are known, used for grasping and handing objects, such as glass, metal or ceramic slabs.

Such gripping devices of known type generally comprise a support body provided with a handle; a deformable suction cup provided with a ring-closed peripheral edge, in which the suction cup is connected to the support body; an air suction pump fixed to the support body and connected to a suction mouth provided in an area inside the peripheral edge of the suction cup by means of a suction duct; and a non-return valve arranged in the suction duct and provided with a valve seat within which a ball shutter is movable between a closed position and an open position.

A need felt in the industry is to limit the costs and burdens of the production and maintenance of such gripping devices while at the same time improving the performance and (gripping) safety of such gripping devices (even if subject to impacts or impulsive stresses).

### DISCLOSURE OF THE INVENTION

An aim of the present invention is to fulfil these and other unresolved needs of the prior art devices, within the framework of a simple, rational and cost-effective solution.

Such aims are achieved by the features of the invention set forth in the independent claim. The dependent claims outline preferred and/or particularly advantageous aspects of the invention.

The invention, in particular, provides a gripping device for handling objects which comprises:
- a support body provided with a handle;
- a deformable suction cup provided with a ring-closed (i.e., peripherally closed of any shape) peripheral edge, in which the suction cup is connected to the support body;

- an air suction pump (e.g., associated with, i.e., fixed to - or on board - the support body and) connected to a suction mouth arranged in an area inside the peripheral edge of the suction cup by means of a suction duct; and
- a non-return valve (unidirectional, i.e., allowing air to flow only in one direction, from the suction mouth towards the suction pump) of the duckbill or umbrella type (more preferably of the duckbill type) and/or made in a single piece associated with the suction duct, wherein the non-return valve is operable by the suction pump from a closed position in which, for example, it prevents the passage of air (in both directions and in particular also) from the suction duct to the suction pump (i.e., to the suction chamber thereof), to an open position, in which, for example, it allows the passage of air between the suction duct and the suction pump (i.e., to the suction chamber thereof).

Thanks to such a solution, it is possible to achieve the above-mentioned aims, i.e., to limit the production costs and burdens, as well as the costs, time and burdens of maintenance and cleaning of such gripping devices.

At the same time, thanks to such a solution it is possible to improve the performance and (gripping) safety of such gripping devices (even if subject to impacts or impulsive stresses).

In fact, thanks to such a solution, the safety of the gripping device is increased. In fact, the non-return valve remains firmly in the closed position regardless of the position and spatial orientation of the gripping device itself, and therefore cannot be opened accidentally while the gripping device is in use, i.e., when it grasps an object to be handled, even if it is subjected to blows, impacts or impulsive stresses.

The costs of the non-return valve and, thus, of the gripping device - being made in a single piece, preferably being of the duckbill type - are more limited than the known solutions, where the valve used is formed by several pieces (valve seat, shutter and possible thrust/drive body of the shutter).

Furthermore, the non-return valve, as designed, allows to reduce assembly costs (for the producer and/or assembler) and the production costs of the gripping device.

Further, the non-return valve, as designed, allows for quicker, easier and more effective maintenance and cleaning.

In fact, as known, such non-return valves, being passed through by the flow of air that is sucked by the suction duct, must be periodically maintained and/or cleaned (e.g., of dust incrustations or other dirt) and possibly lubricated (in the case of the known valve types) to prevent such valves from losing the desired hermetic seal.

Thanks to the aforesaid solution, which is the subject matter of the present invention, the maintenance burdens and operations (disassembly, cleaning and reassembly) are simpler and more effective (e.g., it is possible to inspect, disassemble and wash - with simple water - the non-return valve, and then easily reassemble it, restoring the initial sealing conditions of the gripping device) without the need for any lubrication thereof.

Preferably, the non-return valve is a duckbill valve.

Thanks to such a solution (in addition to being made in a single piece), installation, removal, replacement and/or cleaning are facilitated, as well as the geometry and general maintenance (also with respect to an umbrella valve) and/or allows for high functionality and efficient operation.

The closure of the duckbill non-return valve (normally closed and openable only in response to a perturbation of the air flow passing through it) is entirely entrusted to the monolithic body (in a single piece), made of resilient/elastic material, without any interaction of other external components, such as springs or the like (in practice, the non-return valve lacks any thrust elements, such as springs or the like, separate from the monolithic body of which it is made).

Furthermore, the non-return valve is connected directly, without separate retaining elements from the monolithic body of which it is made, to the suction duct to which it is fixed. For example, the non-return valve (e.g., when it is of the preferred duckbill type) is adapted to be passed through by an air flow which is coaxial with respect to the central axis of the non-return valve, i.e., coaxial to the section of the suction duct to which it is connected/fixed).

On the contrary, the non-return valve (e.g., when it is of the umbrella type) is adapted to be passed through by an air flow which is radial or deviates in a radial direction with respect to the central axis of the non-return valve, i.e., which passes from a direction coaxial to the section of the suction duct to which it is connected/fixed to a radial/deviated direction).

Advantageously, the non-return valve closes autonomously, e.g., it opens (in response to a suction of the pump), deforming itself elastically, and closes again autonomously by exploiting the elasticity (the material from which it is made) thereof.

Further, the support body can be provided with a handle.

Advantageously, then, the (manual or electric) suction pump can be integrated and/or arranged in the handle. Thanks to such a solution, the gripping device is particularly compact and convenient to use.

Alternatively or additionally, the (manual or electric) suction pump can be integrated and/or arranged in the support body.

Further, the suction pump can be manual and comprise:
- a suction chamber (preferably but not limitedly made in the handle), in which one end of the suction chamber is closed by a head connected to the non-return valve; and
- a piston which is movable inside the suction chamber and delimiting, with the suction chamber and the head, a variable-volume (vacuum) chamber.

According to an embodiment, the piston can be moved from a position away from the head, in which the suction chamber has a maximum volume, to a position close to the head, in which the suction chamber has a minimum volume, in contrast to an actuation force exerted by an actuation member (e.g., a spring).

Thanks to such a solution, the suction stroke of the piston (i.e., the stroke from the close position to the moved away position) that creates the vacuum between the suction cup and the object to be grasped is left to the actuation force exerted by the actuation member.

Alternatively, the piston could be moved from a position close to the head, in which the suction chamber has a minimum volume, to a position away from the head, in which the suction chamber has a maximum volume, in contrast to an actuation force exerted by an actuation member (e.g., a spring).

In this case, the suction stroke of the piston (i.e., the stroke from the close position to the moved away position) that creates the vacuum between the suction cup and the object to be grasped is left to the action of the user.

In an alternative embodiment, the suction pump can be configured to suck continuously (although it can be stopped if necessary) from the suction mouth and/or the suction pump can be electrically driven, e.g., electrically powered by a battery (located on board the support body and/or the handle).

Advantageously, then, the gripping device can comprise a vent valve, e.g., the vent valve can be manually drivable, wherein optionally the vent valve is placed on the suction duct interposed between the non-return valve and the suction mouth, e.g., placed on a derivation branch opening to the outside which branches from the suction duct in a branching point interposed between the non-return valve and the suction mouth.

Thanks to such a solution, it is possible to operate the controlled and voluntary release of the object grasped by the gripping device.

Preferably, the vent valve can comprise a normally closed manual actuation button, in which the actuation button is connected to the head.

Advantageously, then, the cylinder head can include two protective sides within which the actuation button is housed, essentially concealed.

Thanks to such a solution, it is substantially limited, if not prevented, that the actuation button can be driven inadvertently by the user and, thus, the accidental release of objects grasped by the gripping device is reduced or minimised.

According to an advantageous aspect of the invention, the suction cup can be removably associated with the support body.

Thanks to such a solution, when the suction cup, i.e., the member which is active in gripping the object and most prone to wear, becomes worn, it can be removed and replaced easily, quickly and without the need for the restoration work required in known types of gripping devices, in which the suction cup is co-moulded or glued to the support body.

According to such an aspect of the invention, the support body can comprise a rigid support plate, the suction cup being fitted peripherally said support plate.

Advantageously, the suction cup can comprise a main peripheral lip on the opposite side with respect to the peripheral edge and configured to circumferentially embrace the support plate.

Thanks to such a solution, the removable connection between the suction cup and the support body is particularly reliable and effective.

Further, the suction cup can have an annular shape.

A further aspect of the invention envisages that the gripping device can comprise a pressure gauge/vacuum gauge connected to the support body, e.g., (but not limited to) by means of fixable, sealed fixing members.

Thanks to such a solution, the pressure gauge/vacuum gauge - which is often subject to impacts that compromise the use thereof and/or the gripping device - can be replaced if necessary easily, quickly and without the need for the restoration work required in the known types of gripping devices, in which the vacuum gauge is glued or firmly fixed to the support body.

Advantageously, the support body can comprise a protective wall alongside the pressure gauge/vacuum gauge.

Moreover, according to an aspect of the invention, the support body can further comprise an auxiliary attachment bracket (e.g., separated/spaced from the handle, where provided) and adapted to removably connect the gripping device (or several gripping devices each provided with such an attachment bracket) to a support bar of a system for gripping and transporting objects (e.g., slabs).

Thanks to such a solution, it is possible to provide a gripping system in which one or more gripping devices are associated (e.g., movably and/or adjustably) with such a support bar, e.g., for transporting large objects and/or slabs.

### BRIEF DESCRIPTION OF THE DRAWINGS

Further features and advantages of the invention will be more apparent after reading the following description provided by way of a non-limiting example, with the aid of the accompanying drawings.
Figure 1 is an axonometric view of a gripping device according to the invention.

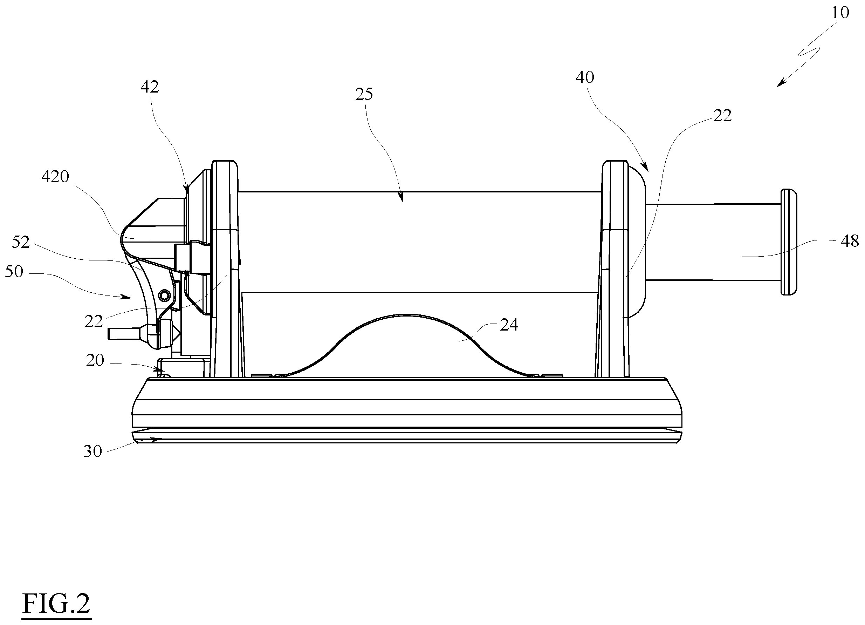

Figure 2 is a side view of Figure 1.

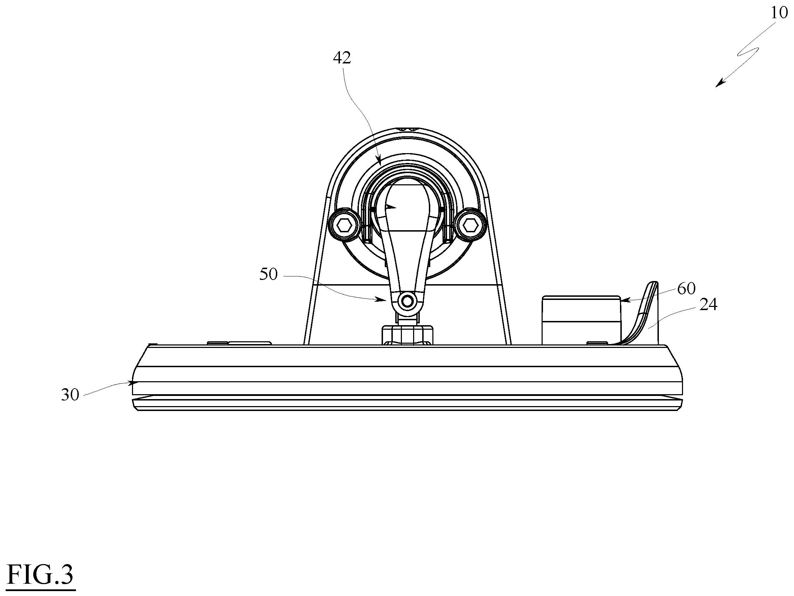

Figure 3 is a front view of Figure 1.

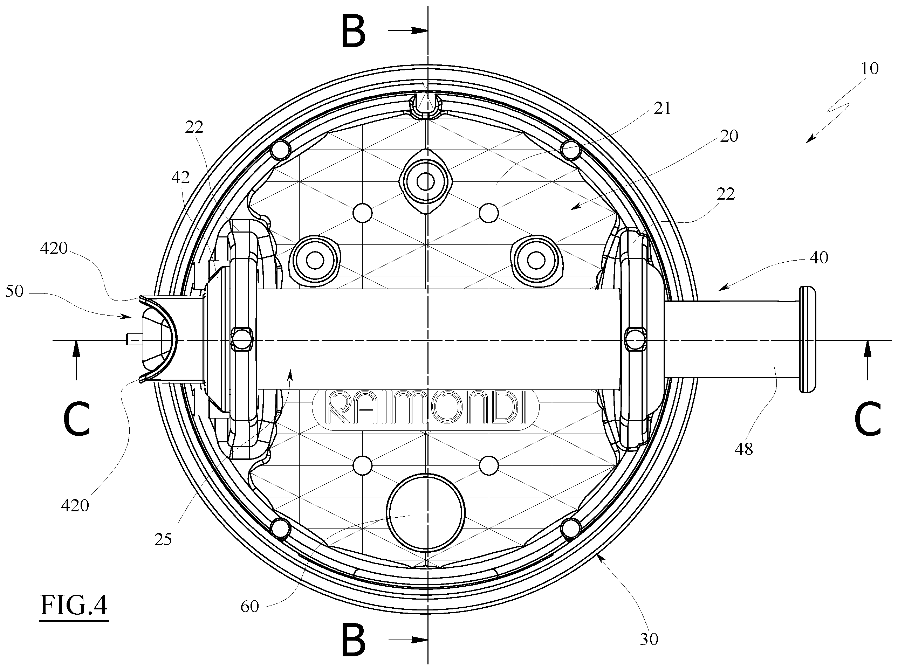

Figure 4 is a plan view from above of Figure 1.
Figure 5 is a sectional view along the trace of section C-C of Figure 4.

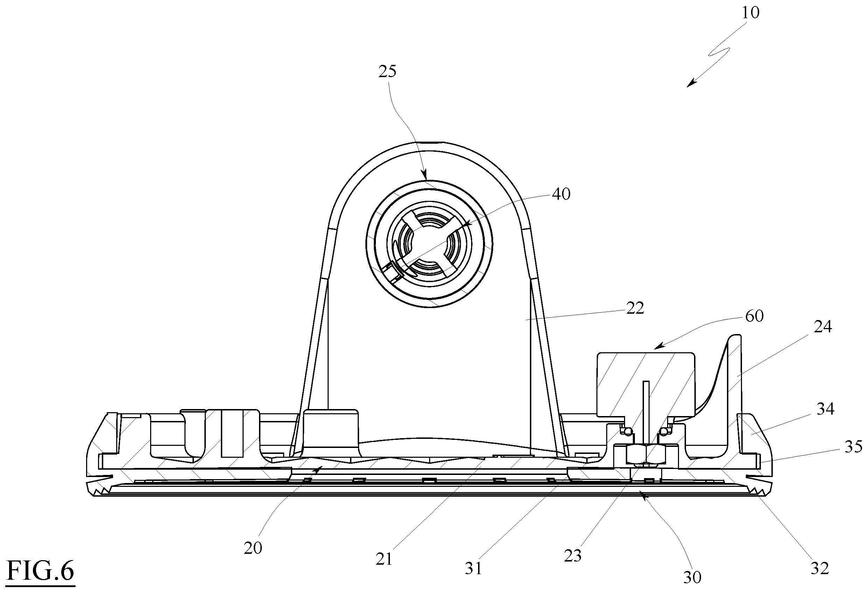

Figure 6 is a sectional view along the trace of section B-B of Figure 4.

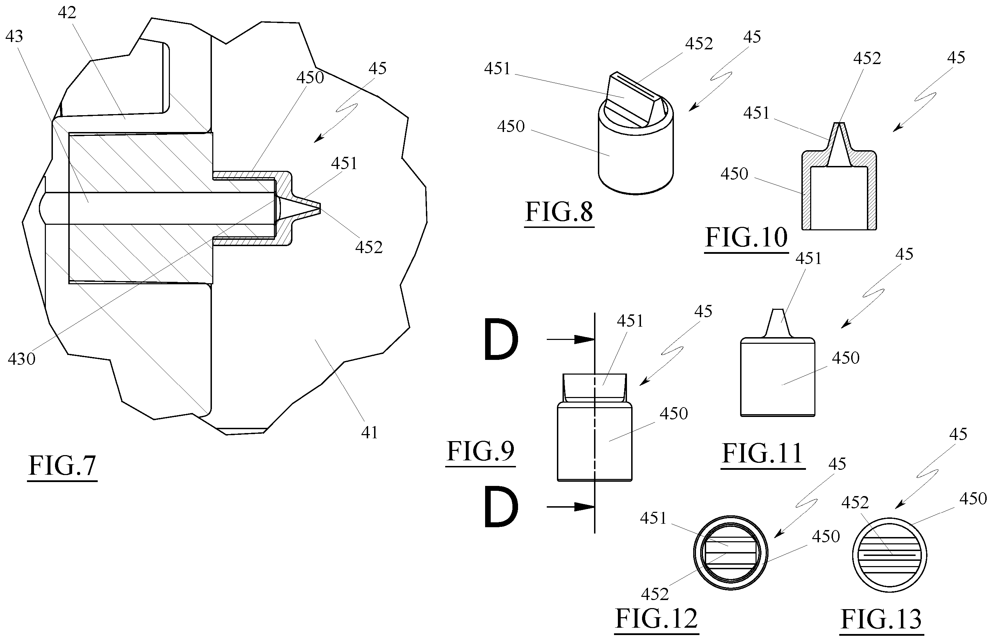

Figure 7 is an enlargement of a detail of Figure 5.
Figure 8 is an axonometric view of a non-return valve of the gripping device according to the invention.
Figure 9 is a front view of Figure 8.
Figure 10 is a sectional view along the trace of section D-D of Figure 9.
Figure 11 is a side view of Figure 8.
Figure 12 is a plan view from above of Figure 8.
Figure 13 is a plan view from the bottom of Figure 8.

### BEST MODE TO IMPLEMENT THE INVENTION

With particular reference to these figures, a gripping device, particularly a suction cup gripping device for grasping and releasing objects, e.g., objects having a substantially smooth (or nearly smooth/slightly textured) and/or water-resistant surface, has been referred to overall with 10.

Preferably, the gripping device 10 is suitable or especially designed for grasping/supporting, transporting and releasing slab-like objects, e.g., slabs, preferably ceramic, glass, metal or other material.

The gripping device 10 comprises a support body 20, which is for example rigid, preferably made of metal or plastic material.

The support body 20 comprises (or consists of) a support plate 21, e.g., substantially circular (or oval), provided a lower face, i.e., adapted to be facing the object to be grasped in operation, and an opposite upper face.

Two parallel ears 22 rise up from the upper face of the support body 20, for example diametrically opposite and each arranged near an edge area of support body 20.

The support plate 21 comprises at least one through hole 23, e.g., made near an edge area of the support body 20 at right angles with respect to the edge areas where the ears 22 are made.

The through hole 23 is preferably delimited and/or made within a seat, e.g., polygonal (or alternatively it could be threaded).

Further, a protection wall 24 rises from the upper face of the support body 20, which is, for example, defined at least in a peripheral area of the edge of the support body 20 externally flanking the through hole 23.

In the example illustrated, the protection wall 24 is a wall with circular extension which joins at the ears 22 and has a protrusion (i.e., a peak) at the edge area where the through hole 23 is made.

The support body 20 then comprises a handle 25, which is rigidly fixed to the support plate 21.

The handle 25 is joined at its opposite ends to the ears 22, e.g., by means of suitable fastening rings, such as elastic rings (Seeger type) or the like.

The handle 25 comprises or consists of a tubular cross-member, e.g., with cylindrical section, the outer shell of which defines a gripping surface - in the example substantially cylindrical - which can be grasped by a user.

The tubular cross-member, i.e., handle 25, is essentially hollow, i.e., it has a cavity, e.g., cylindrical, extending entirely axially, open at the opposite axial ends.

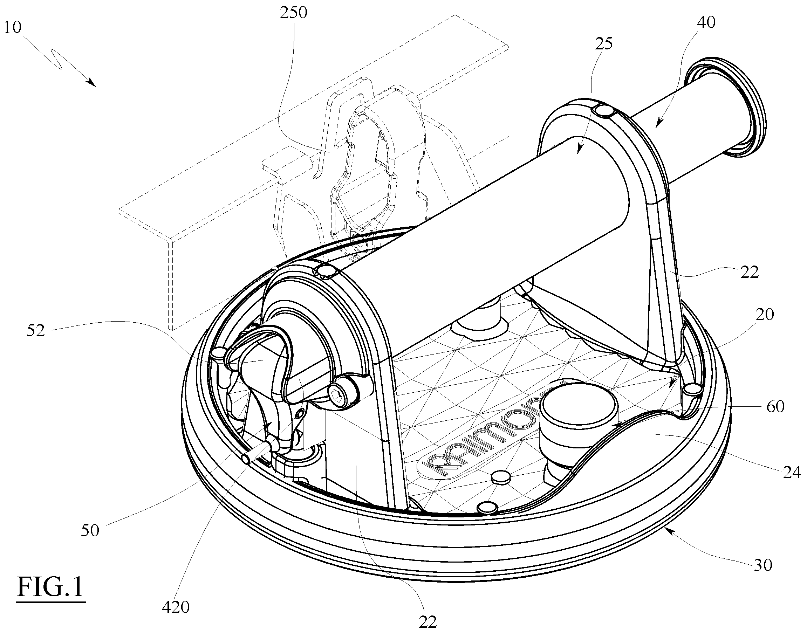

It is possible (optionally, as shown in dashes in Figure 1 only) to fix an attachment bracket 250 to the support body 20, which, for example, rises from the upper face of the support plate 21, preferably from the opposite side of the through hole 23 with respect to the handle 25 (if present), i.e., at a non-zero distance therefrom, i.e., at a distance such as not to prevent a user's hand from being inserted between the handle 25 and the attachment bracket 250.

The attachment bracket 250 has an overall "L" shape (having one or more attachment holes) and is joined to the support plate 21 by means of a threaded connection, preferably by means of one or more screws.

The gripping device 10 then comprises a suction cup 30 (or *"vacuum pad*"), i.e., made of resilient material such as rubber or the like.

The suction cup 30 comprises a first lower face, i.e., adapted to be facing in operation towards the object to be grasped and intended to contact the substantially smooth surface of the object to be grasped, and an opposite second upper face.

The suction cup 30 is substantially circular, in the example the suction cup 30 has a substantially annular shape, i.e., it is provided with a central, circular hole 31, which is substantially coaxial with the outer (circular) periphery of the suction cup itself.

The first lower face of the suction cup 30 comprises a ring-closed peripheral edge 32, which projects from the first lower face in an axial direction, effectively defining a substantially concave shape of the first lower face itself (with concavity facing the object to be grasped).

The peripheral edge 32 can be composed of one or more concentric annular reliefs (3 in the example), e.g., with triangular section, each of which defines a deformable resting plane adapted to rest on the smooth surface of the object to be grasped, effectively compensating for any roughness or irregularities possibly present therein.

Furthermore, the lower face of the suction cup 30 can also comprise a plurality of point reliefs, which are interposed between the peripheral edge 32 and the inner perimeter of the first face delimiting the central hole 31.

The point reliefs are aligned on one or more circumferences concentric to the peripheral edge 32 and/or have a shape which is substantially annular or annular in sections.

Furthermore, the suction cup 30 can comprise, on the outer periphery near the first lower face, an annular notch (having a cross-section substantially shaped like a cusp), which allows for greater elastic yielding in the axial direction of the peripheral edge 32 and, therefore, greater adaptability of the suction cup 30 to the smooth (or nearly smooth) surface of the object to be grasped.

The second upper face of the suction cup 30 is peripherally delimited on the outside by a main peripheral lip 34 on the opposite side with respect to the peripheral edge 32.

For example, the peripheral lip 34 has a closed-ring shape (i.e., it is shaped like a cylindrical shank) and circumferentially encircles the entire outer perimeter of the suction cup 30.

At the base of the peripheral lip 34, at the inner corner thereof joining with the second upper face of the suction cup 30, an annular seat 35 is provided which is recessed in the peripheral lip 34 itself.

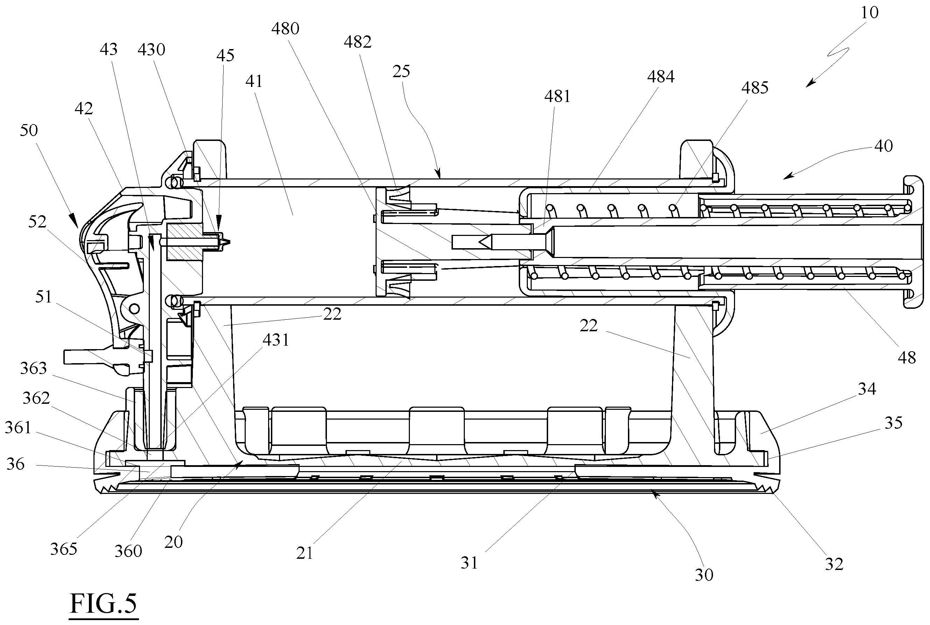

Furthermore, the suction cup 30 (as visible in Figure 5) comprises a through channel 36, e.g., substantially cylindrical, which axially passes through (the entire thickness) of the suction cup 30 itself.

The through channel 36 opens (below) at the first lower face of the suction cup 30 by means of a suction mouth 360, which is defined in an annular area of the suction cup 30 which is radially internal with respect to from the peripheral edge 32, i.e., circumscribed by it.

In practice, the suction mouth 360 is substantially eccentric with respect to the central axis of the suction cup 30.

The through channel 36, in the example, opens (above) at the top of the peripheral lip 34 by means of an outlet mouth 361 (axially aligned with the suction mouth 360).

It cannot be excluded that, alternatively, the outlet mouth 361 could be defined at the second upper face of the suction cup 30.

The through channel 36 has an overall cylindrical shape.

As shown in Figure 5, the through channel 36 is axially prolonged (above) by a further through channel 362 and made in the support plate 21, which in turn is prolonged by a hollow shank 363, e.g., coated (internally) or made of rubber.

The suction cup 30 is connected to the support body 20, as described in more detail below.

For example, the suction cup 30 is removably connected to the support body 20, i.e., it is connected (without adhesives or without surface adhesions, e.g., obtained by co-moulding) so that it can be removed (easily) without the destruction or tearing of parts or, for example, without the need to use removal tools or equipment.

In more detail, the suction cup 30 is coupled to the support plate 21 of the support body 20.

In practice, the suction cup 30 is adapted to be peripherally fitted on the support plate 21, so that the second upper surface of the suction cup 30 contacts the lower surface of the support plate 21 and, for example, so that the suction cup 30 circumferentially embraces the support plate 21 by means of its peripheral lip 34.

In the example, the support plate 21 of the support body 20 can be threaded axially inside the peripheral lip 34 of the suction cup 30, which elastically deforms and expands to substantially accommodate to size the support plate itself.

Furthermore, the outer peripheral edge of the support plate 21 is accommodated to size in the annular seat 35 and, thus, the suction cup 30 is axially retained by the support plate 21, in a removable manner.

In practice, between the suction cup 30 and the support plate 21 a kind of snap, or form, coupling is defined, which can be resolved by simply elastically deforming the suction cup 30 (i.e., the peripheral lip 34).

The suction cup 30, with its second upper face, axially overlaps the through hole 23 made in the support plate 21, which in practice opens below into an annular area of the suction cup 30 which is radially internal with respect to the peripheral edge 32 (i.e., inside the peripheral lip 34), i.e., circumscribed by it.

The gripping device 10 further comprises a suction pump 40 configured to suck the air present in a (closed and variable) volume interposed between the suction cup 30, i.e., circumscribed between its first lower face and the peripheral edge 32, and the substantially smooth surface of the object to be grasped.

The suction pump 40 is fixed to the support body 20, in particular to the handle 25 thereof, as will be better described below.

In more detail, the suction pump 40 is integrated and/or arranged in the handle 25, i.e., the handle 25 is an integral part of the suction pump 40 and/or is housed at least partially or totally inside the handle 25.

It is not excluded, however, that the suction pump 40 may be integrated and/or arranged in the support body 20, e.g., in one of the ears 22 or in a remote/detached position from the handle 25 (if present).

In such a circumstance, the gripping device 10 could also be without any handle 25 (and for example be provided only with the attachment bracket 250).

The suction pump 40 comprises a (cylindrical) suction chamber 41, which is defined e.g., within the (inner cavity of the) handle 25 (or the support body 20), i.e., coincides with (a part of) the inner cylindrical cavity of (the tubular cross-member constituting) the handle itself. In a first version of the gripping device 10, illustrated in the figures, the suction pump 40 is a manual pump, e.g., a positive displacement pump, preferably a piston pump.

In this first version, the suction pump 40 comprises a movable piston 48, e.g., sliding in reciprocating motion, within the suction chamber 41 and delimiting, with the suction chamber 41 and the head 42, a variable volume suction chamber.

For example, the piston 48 is manually driven and comprises a cylindrical head 480 coaxially inserted substantially to size (and sealed) within the suction chamber 41 and a support rod 481 which projects from the cylindrical head 480 in a direction opposite the head 42 and exits from the second axial end of the suction chamber 41 to be manually driven, for example by means of an enlarged or suitably shaped end to be manually driven (e.g., by a finger or a pair of fingers of the user).

An annular gasket 482, e.g., a lip seal, is fitted on the cylindrical head 480.

The lip of the annular gasket 482 is an (elastically) flexible lip and is folded back towards the second end of the suction chamber 41, i.e., on the opposite side with respect to the head 42.

Furthermore, the piston 48 can comprise a hollow liner 484, which is fitted within the suction chamber 41 substantially to size and which accommodates therein, substantially to size, the support rod 481 of the piston 48 itself.

The piston 48, in particular the cylindrical head 480 thereof, is alternately movable within the suction chamber 41 between a position close to the head 42, in which the volume of the suction chamber is minimum (and for example the cylindrical head 480 is substantially in contact with the head 42), and a position moving away, in which the volume of the suction chamber is maximum (and for example the cylindrical head 480 is moved away from the cylindrical head 42 by a distance equal to the distance between the outer end of the support rod 481 from the second end of the suction chamber 41, i.e., equal to the maximum stroke allowed to the piston 48).

The piston 48 further comprises an actuation member 485, for example at least one spring - preferably a helical spring -, which is configured to exert an actuation force (push or pull, e.g., of an elastic nature) on the cylindrical head 480, in contrast to a manual actuation force (push or pull) exerted on the piston 48, i.e., on the support rod 481, by the user.

The actuation member 485 and its actuation force exerted on the cylindrical head 480 of the piston 48 may be different from that illustrated, e.g., it could be a magnetic body adapted to exert a magnetic or other (pushing or pulling) actuation force.

For example, the actuation member 485, i.e., the spring, is interposed between the (movable) support rod 481 and at least one fixed wall with respect to the suction chamber 41, e.g., a bottom wall of the liner 484 or the head 42.

For example, the piston 48, i.e., its cylindrical head 480, is movable from the moved away position to the close position (due to a manual pushing actuation force) in contrast to the (pushing) actuation force exerted by the actuation member 485 thereon, i.e., on the cylindrical head 480.

In detail, in the illustrated example, the actuation member 485 (i.e., the spring, compression in the example) is axially interposed between an inner wall of the enlarged or suitably shaped end of the support rod 481 and the bottom wall of the liner 484, i.e., it is fitted on an axial portion of the support rod 481 inside the liner 484.

In practice, the spring defining the actuation member 485 is compressed each time the support rod 481 is pressed (by the user) to bring the cylinder head 480 to its close position and, each time the support rod 481 is released, the spring defining the actuation member 485 is elastically extended, exerting the aforesaid (elastic) actuation force on the cylinder head 480 to bring it back to its moved away (stable equilibrium) position.

In this solution, in practice, the actuation member 485 is configured to bring (push) the piston 48, i.e., its cylindrical head 480, to the moved away position, whenever the piston 48, i.e., its cylindrical head 480, is manually actuated (pushed) to its close position and then released.

When the piston 48, i.e., the cylindrical head 480 thereof, is moved from the moved away position to the close position, the lip of the annular gasket 482 bends radially towards the axis of the suction chamber 41 (tends to narrow radially) and, therefore, does not exert a perfect seal on the inner wall of the suction chamber 41 and allows the air present in the suction chamber to pass through, which leaks from the cylindrical head 480 and exits from the second end of the suction chamber 41.

When the piston 48, i.e., the cylindrical head 480 thereof, is instead moved (by action of the actuation member 485) from the close position to the moved away position, the lip of the annular gasket 482 tends to enlarge radially and, therefore, rubs (in a forced manner) on the inner wall of the suction chamber 41 exerting a substantial seal e, therefore, the stroke of the cylindrical head 480 from the close position to the moved away position generates a vacuum inside the suction chamber (circumferentially delimited by the suction chamber 41 and axially delimited by the head 42 and by the cylindrical head 480), wherein the aforesaid vacuum is such as to allow the suction of air by the suction mouth 360 through (the through channel 46,) the suction duct 43.

In a second possible version of the gripping device 10, which is not illustrated, the suction pump 40 can be configured to suck air continuously and/or the suction pump 40 can be electrically driven.

In this case, the suction pump 40 is for example a dynamic (continuous flow) pump.

The suction pump 40 comprises (a casing provided with) a delivery mouth (from which a - compressed - air flow is forced out of the casing) and a suction mouth (from which an air flow is forced to enter - sucked into - the casing).

For example, the suction pump 40 (in the electric version) is a diaphragm pump (in which an electric motor drives for example a piston that moves one or more coupled membranes that create a vacuum in the suction chamber).

The suction pump 40 - when driven by the electric motor - is configured to generate the (continuous) air flow that is directed from the suction mouth to the delivery mouth.

The electric suction pump 40 (i.e., the casing) therefore comprises an electric motor to drive it.

For example, the suction pump 40 (in the electric version) comprises or is connected to a (rechargeable) power supply battery, which is configured to power (in its discharge cycle) suction pump 40 (i.e., the electric motor thereof).

The power supply battery is, therefore, an electrical charge accumulator.

The power supply battery comprises, in turn, one or more cells electrically connected to each other (e.g., in series).

The power supply battery is, for example, a lithium-ion battery.

For example, the supply pump 40 (as well as the power supply battery) is included within the handle 25, for example (coaxially) inside the (inner cavity) of the handle 25.

Further, the suction pump 40 is provided with/connected to an on/off switch thereof (arranged outside the handle 25, e.g., at or near an end area thereof), which is associated with the electric motor, and e.g., the aforesaid electrical circuitry, to interrupt or allow the electric power supply of the electric motor.

Further, the suction pump 40 is provided with/connected to a control unit (i.e., an electronic board that controls and/or commands the operation thereof).

For example, the control unit is also arranged within the handle 25 (i.e., within the inner cavity thereof) and can have one or more LEDs or indicator lights, visible from outside the handle 25, that signal the operating status and/or the charge status of the power supply battery.

Furthermore, the gripping device 10 can comprise a pressure (vacuum) sensor means at the first (lower) face of the suction cup 30.

The sensor means is, for example, configured to detect and/or determine and/or generate a signal indicative of such pressure (vacuum).

The sensor means is operatively connected to the electronic control unit and/or the power supply battery and/or the switch to automatically reactivate the supply pump 40 if the (negative) pressure present at the first (lower) face of the suction cup 30 rises above a certain safety value (i.e., a vacuum loss occurs in the volume enclosed between the first face of the suction cup 30 and the surface of the grasped object).

Therefore, if during use of the gripping device 10 a loss of vacuum occurs at the suction cup 30, the suction pump 40 can be driven automatically until the minimum vacuum level necessary to ensure the safe gripping of the suction cup 30 on (the surface of) the object is restored.

The (electric or manual) suction pump 40 can be configured to engage, preferably in a removable and sealed manner, the inner cavity of the handle 25.

In practice, when the suction pump 40 is inserted into the (inner cavity of the) handle 25, a sealing gasket (e.g., annular), which takes the place of the annular gasket 480 of the manual suction pump described above, divides the suction chamber 41 into two fluidically separated environments, of which a first environment close to the head 42 is in fluidic communication with the suction mouth 360 and defines a closed (constant volume, in this case) suction chamber.

For example, the gripping device 10 and/or the suction pump 40 - in both versions described above - comprises a head 42, which is rigidly fixed to the handle 25 and/or the support body 20 (e.g., to one of the two ears 22 thereof), so as to occlude a first axial end of the handle 25 and/or the suction chamber 41.

The head 42 comprises a shank adapted to axially thread to size and sealingly inside the first axial end of the suction chamber 41 defined by the handle 25, and an outer ring nut adapted to be fixed, e.g., by means of fasteners, such as (push or snap) couplings or screws or the like, to a peripheral edge of the first end of the handle 25.

The head 42 defines or comprises a suction duct 43, which is configured to put the suction mouth 360 of the suction cup 30 in communication with the suction chamber 41, as will be better described below.

The suction duct 43, in the example, comprises an outlet mouth 430, which is defined in the part of the head 42, i.e., the shank, facing inside the suction chamber 41.

For example, the outlet mouth 430 is essentially circular (and coaxial to the suction chamber 41, i.e., it is, in fact, an axial opening with respect to the axis of the suction chamber 41).

For example, the outlet mouth 430 is defined at a terminal/end part, e.g., tapered or with a smaller diameter, of an insert inserted, e.g., removably (e.g., by interference and/or interlocking) or fixedly (e.g., by gluing), into the head 42, i.e., into the shank thereof. The aforesaid end part of the insert faces inside the suction chamber 41, e.g., for a limited axial section thereof.

The suction duct 43 then comprises an inlet mouth 431, which is defined in the part of the head 42, which faces outside the suction chamber 41, in the example it is the end portion of a hollow stem (made in a single piece with the head 42) extending in a radial direction (with respect to the suction chamber 41) from the head 42.

In practice, the inlet mouth 431 is a radial opening with respect to the axis of the suction chamber 41.

The suction duct 43 puts the inlet mouth 431 in fluid communication with the outlet mouth 430 and extends longitudinally therebetween.

In the example, therefore, the suction duct 43 has a substantially curved longitudinal extension, e.g., "L" shaped, defined by a first section with a substantially radial extension provided with the inlet mouth 431 and a second section with an axial extension provided with the outlet mouth 430, between which a connecting elbow is interposed.

As shown in Figure 5, the suction duct 43 of the head 42, in particular the free end portion of its first section (provided with the inlet mouth 431, inserts to size and sealingly inside the further through channel 362 (defined by the hollow shank 363) in order to connect, through its inlet mouth 431 with the suction mouth 360 (through the inlet mouth 361), in practice putting the suction mouth 360 in fluid communication (through a section of the further through channel 362 and the through channel 36) with the inlet mouth 431 (and therefore with the outlet mouth 430) of the suction duct 43.

In fact, the suction duct 43, in particular the free end portion of its first section, is axially prolonged (and at least partially defined) by at least one section of the through channel 36, or, in other words, the through channel 36 is part (end) of the suction duct 43 (removably connected to the head 42, as an integral part of the suction cup 30).

For example, a filter 365 can be arranged in the suction duct 43 (i.e., between the suction mouth 360 and the suction chamber 41), which is configured to filter (from impurities/dust) the air flow which passes through the suction duct 43 (sucked in by the suction pump 40). Preferably, the filter 365 (e.g., discoidal) is interposed between the further through channel 362 and the outlet mouth 361.

In the suction duct 43 (i.e., between the suction mouth 360 and the suction chamber 41) there is a non-return valve 45, i.e., an automatically driven one-way valve, which is configured to intercept (i.e., selectively close and open) the fluid connection between the suction mouth 360 and the suction chamber 41, more preferably between the outlet mouth 430 and the inlet mouth 431 of the suction duct 43.

In practice, the non-return valve 45 is adapted to intercept (a section of) the suction duct 43, in the example the second section thereof, so as to regulate the opening and closing thereof.

In practice, the non-return valve 45 is fixed, e.g., removably, on a section of the suction duct 43, preferably on the (section facing the) insert (which defines the outlet mouth 430). According to the present invention, the non-return valve 45 is preferably of the duckbill type (duckbill valve) and/or made in one piece.

It is not excluded that the non-return valve 45, in certain applications (not illustrated), may be of the umbrella type (although the duckbill valve has been found to have greater performance and/or more practicality).

For example, the (duckbill) non-return valve 45 is made of elastomeric material (e.g., Shore A hardness comprised between 40-90, e.g., 70).

The non-return valve 45 has a tubular inlet section 450, adapted to be fitted to size and sealingly on a section of the suction duct 43, preferably on the (section facing the) insert (defining the outlet mouth 430), and a (duckbill) tapered (end) closing/opening cap 451 provided with at least two walls (or flaps) crushed against with each other to define a narrow passage slit 452 (of air), which is defined at the free (and tapered) end of the crushed walls (i.e., of the closing/opening cap 451).

The closing/opening cap 451 is arranged substantially within the suction chamber 41 projecting axially from the section of the suction duct 43, preferably from the (section facing the) insert (defining the outlet mouth 430), on which the tubular inlet section 450 is fitted. It is not excluded that there are more than two walls crushed together, for example three or four in number, defining a multi-lobed ("T"- or "X"-shaped) conformation of the slit 452. In practice, as a result of the pressure of the air passing through it, the non-return valve 45, in detail the closing/opening cap 451 and the slit 452, changes its conformation (shape and/or size), thanks to the elastic deformability of the material with which it is made.

The non-return valve 45 is switchable between a closed position, in which the slit 452 is closed/sealed (i.e., the crushed walls of the closing/opening cap 451 are joined together and seal the slit 452 itself), and an open position, in which the slit 452 is open and/or defines a passage gap (non-zero) that allows an air flow to pass therein (in contrast to the elasticity of the material with which the non-return valve 45 itself is made).

When the slit 452 is open, in fact, the crushed walls of the closing/opening cap 451 are (slightly) spread apart from each other, opening the section of the slit 452.

In practice, the non-return valve 45 is of the normally closed type, i.e., the slit 452 is held in the closed position by the elasticity of the material with which the non-return valve 45 itself is made.

In particular, the non-return valve 45 is configured so as to open the suction duct 43, i.e., to be switched to its open position (branching the slit 452), when a pressure value lower than a pre-determined negative threshold pressure value (dependent on the resistant elastic force of the closing/opening cap 451 of the non-return valve 45) is reached in the suction chamber 41.

When a pressure greater than or equal to the pre-determined negative threshold pressure value (or when there is a positive pressure or ambient pressure) is present in the suction chamber 41 (in particular in the environment close to the outlet mouth 430 of the suction duct 43), the non-return valve 45 is configured to (instantaneously) close the suction duct 43, i.e., to be switched (instantaneously) to its closed position.

In practice, the vacuum created inside the suction chamber 41, by the effect of the suction pump 40, is such as to (open the slit 452 of the non-return valve or) switch the non-return valve 45 to its open position, in contrast to the resistant elastic force acting thereon, allowing the air to flow out along the suction duct 43 from the suction mouth 360 to the outlet mouth 430 and enter the suction chamber itself.

When the suction pump 41 terminates its action (i.e., at each stroke-end of the piston 48 and/or at each stop of the suction pump itself), the non-return valve 45 closes automatically, i.e., the crushed walls of the closing/opening cap 451 crush together, occluding the slit 452 (due to the aforesaid elastic force) leaving the (closed and variable) volume interposed between the suction cup 30 (i.e., its first lower face and the peripheral edge 32) and the (substantially smooth) surface of the object to be grasped substantially isolated from the external environment.

In practice, with the non-return valve 45 in the open position, air is allowed to be sucked from the (closed and variable) volume interposed between the suction cup 30 and the (substantially smooth) surface of the object to be grasped, and thus, the pressure (to the desired degree of vacuum) inside such volume is decreased, allowing the object to remain firmly grasped by the suction cup 30 due to the vacuum principle.

The hermetic (and instantaneous) closure of the non-return valve 45 - in how it is configured, i.e., being of the monolithic and/or duckbill type - makes it possible to maintain and stabilise the degree of vacuum obtained, even if the non-return valve 45 and/or the gripping device 10 were subject to shocks or impulsive forces.

The gripping device 10 further comprises a manually driven (voluntary) vent valve 50, which is configured to operate the (voluntary) release of the grasped object from the suction cup 30 by the user.

The vent valve 50 is, for example, supported by and defined in the head 42, e.g., substantially concealed therein (and well protected), as will be better described below.

The vent valve 50 comprises a vent duct 51, which, for example, branches off from the suction duct 43 of the head 42, preferably in/from a portion thereof interposed between the non-return valve 45 and the inlet mouth 431 (i.e., the suction mouth 360).

In the embodiment illustrated, the vent duct 51 is provided in the first section of the suction duct 43, i.e., substantially at right angles therewith (and facing outwards).

The vent duct 51 comprises an access mouth that opens inside the suction duct 43 (in the portion thereof interposed between the non-return valve 45 and the inlet mouth 431) and a vent mouth which opens outside the suction duct 43, e.g., in fluid communication with the external environment.

The vent valve 50 then comprises an actuation button 52, which is configured to selectively open and close the vent duct 51, i.e., the vent mouth thereof.

The actuation button 52 is for example normally closed, i.e., it is kept pushed (pressed) against the peripheral walls of the vent mouth (in the closed position of vent duct 51) by a push member, which is configured to exert a non-zero pushing force on the actuation button 52 directed towards the vent mouth.

For example, the actuation button 52 is connected to the head 42, and is for example hinged thereto with the possibility of oscillating around an oscillation axis (parallel to the lower face of the suction cup 30) between a closed position of the vent duct 51 and an open position of the vent duct 51.

In practice, the actuation button 52 defines a lever (of the first type), in which a first end of the actuation button 52 is enlarged or shaped to be comfortably driven manually (e.g., by a finger of the user) and an opposite second end, arranged on the opposite side with respect to the oscillation axis, shaped like a pin (possibly provided with a ring seal fitted thereon) which is configured to enter at least partially into the vent duct 51 occluding the same (substantially interlocking / snapping).

The actuation button 52 is, in practice, configured to be moved (i.e., oscillated) alternately from the closed position of the vent duct 51 and the open position of the vent duct 51 in contrast to the thrust force exerted by the push member.

The push member is preferably an elastic element, which is constrained to the head 42. As illustrated in the figures, this elastic element comprises a preferably helical (compression) spring, which is interposed between an outer wall of the head 42 (e.g., partially fitted on a special support pin or partially housed within a special seat obtained therein and fixed therein) and the first end of the actuation button 52.

In practice, the spring defining the push member is compressed whenever the first end of the actuation button 52 is pressed (by the user) approaching the head 42 (to bring the second end of the actuation button to disengage the vent duct 51 and, thus, the actuation button 52 to its open position) and, each time the first end of the actuation button 52 is released, the spring defining the push member elastically extends, exerting the aforesaid (elastic) thrust force on the actuation button 52 to return it to its closed (stable equilibrium) position.

The head 42 comprises two protection sidewalls 420 within which the actuation button 52 is housed, substantially concealed (e.g., at least the first end thereof).

Such protection sidewalls 420, which extend longitudinally parallel to the first section of the suction duct 43, have a top that is substantially coplanar with the surface of the actuation button 52 distal from the head 42 or, in any case, such a surface of the actuation button 52 does not protrude beyond the protection sidewalls 420 themselves.

Finally, the gripping device 10 comprises a vacuum gauge 60 (or pressure gauge), which is configured to measure and indicate the value of the vacuum (of the negative pressure) generated in the (closed and variable) volume interposed between the suction cup 30 (i.e., its first lower face and the peripheral edge 32) and the substantially smooth surface of the object to be grasped.

The vacuum gauge 60 comprises a body or case provided with a dial and an indicator (pointer) and inside which a transducer is placed which is adapted to convert a pressure into a mechanical displacement force of the indicator, from which a coupling shank branches which is adapted to be fixed to the support body 20 , in particular to the support plate 21, and put the transducer in fluid communication with the (closed and variable) volume interposed between the suction cup 30, i.e., its first lower face and the peripheral edge 32, and the substantially smooth surface of the object to be grasped.

The coupling shank is for example threaded and preferably supports a ring seal, e.g., of the o-ring type.

The vacuum gauge 60 can be connected to the support body 20 in a resolvable manner (i.e., so that it can be removed without losing the structural integrity thereof or the support body 20 and without having to remove adhesives or similar adhesive means).

In detail, the vacuum gauge 60 is connected by means of its coupling shank to the through hole 23 made in the support plate 21 (e.g., inserted in the polygonal seat), e.g., at the upper face thereof and protruding above it.

Between the coupling shank and the through hole 23, a threaded connection is preferably defined, e.g., made by a tightening nut which is screwed onto the coupling shank from underneath the support plate when it is inserted into through hole 23 (or, alternatively, made by the inner thread, where provided, of the through hole 23 which couples with the outer thread of the coupling shank).

The coupling shank is adapted to be sealingly connected to the through hole 23 by interposing said ring gasket, which is compressed between the two when the threaded connection is tightened.

Alternatively, it can be envisaged that the sealed connection between the vacuum gauge 60 and the support plate 21 may be different from that illustrated, e.g., an interlocking or bayonet connection or other (sealing) removable connection could be provided.

In practice, the vacuum gauge 60 is arranged next to the protection wall 24, which, therefore, at least on one side (radially facing the outside of the gripping device 10, i.e., the support plate 21) at least partially surrounds and/or flanks the vacuum gauge 60 (i.e., the body thereof), in fact protecting it from accidental shocks or stresses.

The protection wall 24, i.e., its projection or peak, has a height with respect to the plane defined by the upper surface of the support plate 21 substantially equal to or comparable with the height of the vacuum gauge 60 (with respect to the same plane).

In light of the above, the operation of the gripping device 10 is as follows.

When an object is to be grasped, e.g., a ceramic slab, it is sufficient to place the suction cup 30 of the gripping device 10 on the (smooth or almost smooth) surface of the object (e.g., the visible, rough surface of the slab itself).

The suction cup 30 rests on the surface of the object by means of the peripheral edge 32, which (in its entirety) is kept in forced contact by the weight of the gripping device 10 itself or by an auxiliary pressure action exerted by the user.

By actuating the suction pump 40, i.e., by repeatedly actuating the piston 48 alternately between the close position and the moved away position (and vice versa) or by actuating the switch thereof, a vacuum is gradually created in the volume enclosed by the peripheral edge 32 and interposed between the suction cup and the surface of the object to be grasped.

When the vacuum has reached the desired value (value which can be checked through the indication given by the vacuum gauge 60 and/or the sensor means), the actuation of the suction pump 40 is interrupted and the handle 25 is grasped in order to lift and safely transport / handle the object grasped by the suction cup 30 of the gripping device 10.

The non-return valve 45, which remains in its closed position, allows to keep the aforesaid volume closed, in which the vacuum has been made in whatever position the object and the gripping device 10 are arranged and even if the gripping device 10 is subjected to shocks or impulsive forces.

Once the grasped object has been positioned in the desired stable position, it can be released by simply actuating the actuation button 52 so as to open the vent valve 50.

Thereby, although the non-return valve 45 remains in its closed position, the aforesaid volume in which the vacuum had been made for gripping the object is opened through the opening of the vent duct 51 and put in communication with the external environment (at atmospheric pressure); thus the suction cup 30 is able to detach itself from the surface of the object.

A plurality of gripping devices 10 can also be used in combination with each other, i.e., to grasp the same object, i.e., the same slab, being together connected to a system for gripping and transporting objects (made by one or more bars), as known, by means of their attachment bracket 250.

The invention thus conceived is susceptible to many modifications and variants, all falling within the same inventive concept.

Furthermore, all of the details can be replaced with other technically equivalent elements. In practice, the materials used, as well as the contingent shapes and sizes, can be whatever according to the requirements without for this reason departing from the scope of protection of the following claims.

## Claims

1. Gripping device (10) for handling objects comprising:
- a support body (20);
- a deformable suction cup (30) provided with a ring-closed peripheral edge (32), in which the suction cup (30) is connected to the support body (20);
- an air suction pump (40) connected to a suction mouth (360) arranged in an area inside the peripheral edge (32) of the suction cup (30) by means of a suction duct (43,36); and
- a non-return valve (45) selected from a duckbill valve and an umbrella valve, wherein the non-return valve (45) is associated with the suction duct (43,36) and is operable by the suction pump (40) from a closed position to an open position.

2. Gripping device (10) according to claim 1, wherein the non-return valve (45) is a duckbill valve and preferably closes autonomously.

3. Gripping device (10) according to claim 1, wherein the support body (20) is provided with a handle (25).

4. Gripping device (10) according to the preceding claim, wherein the suction pump (40) is integrated and/or arranged in the handle (25).

5. Gripping device (10) according to claim 3 or 4, wherein the suction pump (40) is of the manually operated type and comprises:
- a suction chamber (41) preferably made in the handle, wherein one end of the suction chamber (41) is closed by a head (42) connected to the non-return valve (45); and
- a piston (48) movable inside the suction chamber (41).

6. Gripping device (10) according to the preceding claim, wherein the piston (48) is movable from a position close to the head (42), in which the suction chamber (41) has a minimum volume, to a position away from the head, in which the suction chamber (42) has a maximum volume, in contrast to an actuation force exerted by an actuation member.

7. Gripping device (10) according to any one of claims 1-4, wherein the suction pump (40) is configured to continuously suck from the suction mouth (360), preferably the suction pump (40) is electrically driven.

8. Gripping device (10) according to any one of the preceding claims, comprising a vent valve (50).

9. Gripping device (10) according to any one of the preceding claims, wherein the support body (20) comprises an attachment bracket (250) adapted to removably connect the gripping device (10) to a support bar of an object gripping and transport system.

10. Gripping device (10) according to any one of the preceding claims, wherein the suction pump (40) is integrated and/or arranged in the support body (20).
